# EUROPÄISCHE PATENTSCHRIFT

(11) **EP 0 520 258 B1**
(45) Veröffentlichungstag und Bekanntmachung des Hinweises auf die Patenterteilung: **14.09.1994**
(21) Anmeldenummer: 92109958.6
(22) Anmeldetag: 13.06.1992
(51) Int. Cl.: F03B 11/04, F01D 5/26

(54) **Laufschaufelbefestigung**
System for keying rotor blades
Dispositif de fixation d'aubes de rotor

(30) Priorität: 28.06.1991 CH 1926/91
(43) Veröffentlichungstag der Anmeldung: 30.12.1992
(73) Patentinhaber: ASEA BROWN BOVERI AG, 5400 Baden (CH)
(72) Erfinder: Meyer, Hans, CH-5442 Fislisbach (CH); Nguyen, Ui-Liem, Dr., CH-5432 Neuenhof (CH); Novacek, Peter, CH-5412 Gebenstorf (CH); Slepcevic, Paul, CH-5415 Nussbaumen (CH)

(56) Entgegenhaltungen:
- CH-A- 660 207

## Beschreibung

### Technisches Gebiet

Die Erfindung betrifft eine Laufschaufelbefestigung im Trommelrotor einer Turbomaschine, in welchem die Schaufeln mit ihren Füssen reihenweise in umlaufenden Schaufelnuten mit seitlichen Tragzacken befestigt sind.

### Stand der Technik

Derartige Schaufelbefestigungen finden sich in der Regel bei Verdichter- und Turbinenrotoren. Beim Anfahren von Turbomaschinen, insbesondere beim Kaltstart und ganz allgemein bei Temperaturschwankungen treten wegen unterschiedlicher Erwärmung von Laufschaufeln und Rotor Ringspannungen auf. Von den Tragzacken der Schaufelbefestigung müssen diese Ringspannungen als Flächenpressung aufgenommen werden. Die Ringspannungen weisen ihren höchsten Wert im Bereich der Rotoroberfläche auf und nehmen radial von aussen nach innen ab.

Diese Ringspannungen bilden dabei zusätzliche Belastungen zu den üblichen Betriebsspannungen - welche durch Fliehkräfte in radialer Richtung und durch Fluidkräfte in Axial- und in Umfangsrichtung enstehen - und können von sich aus zu Schäden führen oder zumindest dazu beitragen. Eine Methode zum Vermeiden dieser Ringspannungen, die sich jedoch nicht in allen Fällen eignet, ist das Vorsehen von Umfangsspiel zwischen zwei benachbarten Schaufelfüssen.

### Darstellung der Erfindung

Der Erfindung liegt die Aufgabe zugrunde, bei Rotoren der eingangs genannten Art eine Massnahme zu treffen, bei der die Ringspannungen weitgehend vermieden werden.

Erfindungsgemäss wird dies dadurch erreicht, dass im Umfangsrichtung zwischen benachbarten Schaufelfüssen nachgiebige Elemente vorgesehen sind, die zwei deformierbare Längsstege sind, die entweder auf einem Zwischenblech oder am Schaufelfuss selbst an zumindest einer seiner Seiten angeordnet sind und die sich in radialer Richtung über zumindest annähernd die Tiefe der Schaufelnut erstrecken.

Der Vorteil der Erfindung ist neben der vorherrschenden Klarheit über die Kräfteverhältnisse und der Einfachheit der Massnahme noch darin zu sehen, dass die in Umfangsrichtung liegenden Flächen der Schaufelfüsse nicht auf der ganzen Fläche mit der üblichen Genauigkeit hergestellt werden müssen.

### Kurze Beschreibung der Zeichnung

In der Zeichnung sind zwei Ausführungsbeispiele der Erfindung anhand des Hochdruckrotors einer axialdurchströmten Dampfturbine schematisch dargestellt.
Es zeigen:
- Fig.1: eine teilweise geschnittene Teilansicht eines beschaufelten Trommelrotors;
- Fig.2: eine teilweise Abwicklung eines Zylinderschnittes gemäss Linie II-II in Fig 1.
- Fig.3: ein Zwischenblech in Vorderansicht;
- Fig.4: ein Schaubild, welches das Mass der Deformation in Funktion der Belastung aufzeigt;
- Fig.5: die Vorderansicht einer mit der erfindungsgemässen Massnahme ausgerüsteten Laufschaufel.

Es sind nur die für das Verständnis der Erfindung wesentlichen Elemente gezeigt. Nicht dargestellt sind von der Anlage beispielsweise sämtliche nichtrotierenden Teile sowie die Wellenenden mitsamt der Lagerung. Die Strömungsrichtung des Arbeitsmittels ist mit einem Pfeil bezeichnet.

### Weg zur Ausführung der Erfindung

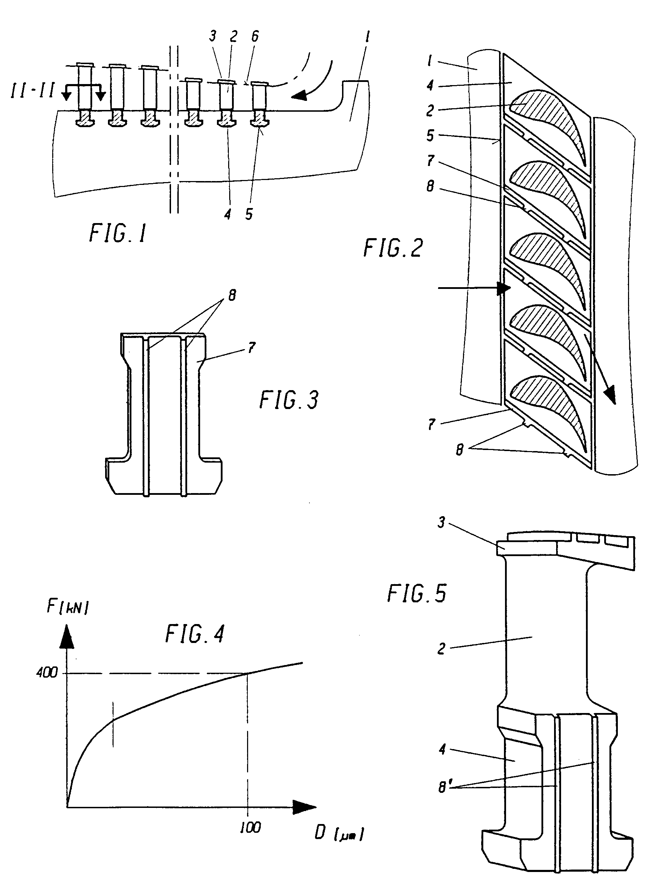

Gemäss Fig.1 ist der Hochdruckrotor 1 mit einer gewissen Anzahl Laufreihen versehen. Die einzelnen Schaufeln, bestehend aus Schaufelblatt 2 mit Deckplatte 3 und Schaufelfuss 4 sind in umlaufenden Schaufelnuten 5 eingesetzt. Strichpunktiert ist die strömungsbegrenzende Kontur 6 des nichtdargestellten Zylinders, welcher die gleiche Anzahl Leitschaufelreihen trägt. Die Schaufelfüsse 4 weisen Hammerkopfform auf. Die während des Betriebes auf die Schaufel wirkenden Fliehkräfte und Biegemomente werden mittels Schultern über entsprechend konfigurierte Tragzacken der Schaufelnut in den Rotor geleitet. In Umfangsrichtung liegen die Schaufelfüsse eng aneinander. Die infolge der Wärmeausdehnung der Schaufelfüsse enstehenden Ringspannungen müssen demnach auch von diesen Tragzacken aufgenommen werden.

Zunächst sei der Fall betrachtet, dass der Rotor mit vortordierten Deckplatten-Schaufeln bestückt ist, und dass die entsprechenden Schaufelnut weist keine Einfüllöffnung für die Schaufelfüsse auf. Gemäss den Fig.2 und 3 besteht das erfindungsgemässe nachgiebige Element in diesem Fall aus einem Zwischenblech 7, welches an einer seiner Breitseiten mit zwei deformierbaren Längsstegen 8 ausgerüstet ist. Das Zwischenblech 7 weist die gleiche Geometrie auf wie der Schaufelfuss 4 (Fig.5) und ist zweckmässigerweise auch aus dem gleichen oder zumindest einem ähnlichen Material gefertigt. Die Längsstege 8 erstrecken sich über die gesamte Höhe des Zwischenbleches. Da die radial äusseren Partien des Schaufelfusses und des Zwischenbleches die Wandungen des durchströmten Schaufelkanals bilden, wirken die oberen Enden der Längsstege in dieser Ebene somit auch als Dichtung zwischen Schaufeleintritt und Schaufelaustritt.

Die Längsstege 8 sind nunmehr mit einer solchen Geometrie ausgestattet, dass sie sowohl elastisch als auch plastisch deformierbar sind. Hierzu eignet sich beispielsweise eine Trapezform mit 45° Abschrägungen.

Die nachgiebige Wirkung der neuen Massnahme ist anhand eines Auslegungsbeispieles im Schaubild der Fig.3 ersichtlich. Auf der Abzisse ist die Deformation D in [µm] angegeben, auf der Ordinate die in Umfangsrichtung auftretende Belastung F in [kN]. Es versteht sich, dass hier auf die Bekanntgabe von Absolutwerten verzichtet wird, da diese wegen ihrer Abhängigkeit von allzu zahlreichen Parametern ohnehin ungenügende Aussagekraft besitzen. Die Dimensionierung der nachgiebigen Elemente geschieht zweckmässigerweise in der Art, dass eine allenfalls auftretende plastische Deformation sich auf den radial äusseren Bereich der Längsstege - in welchem die grössten Ringspannungen üblicherweise auftreten - beschränkt und dort keine störenden Einflüsse ausübt. Dieser Bereich zeichnet sich im Schaubild durch den flachen Kurvenverlauf aus. Bei adäquater Gestaltung der Stege werden die Deformationen auf dem überwiegenden Teil ihrer Längserstreckung im elastischen Bereich auftreten, der durch den steilen Ast der Kurve dargestellt ist.

Während des Betriebes werden die beiden Stege beim Auftreten der Ringspannung somit nachgeben und damit die auf die Tragzacken wirkende Kraft begrenzen.

Diese Zwischenbleche können selbstverständlich auch bei Rotoren, deren Schaufelnuten eine Einfüllöffnung aufweisen, angewendet werden. Bei derartigen Rotoren kann jedoch auch die Ausführungsvariante nach Fig.5 zum Zuge kommen. Hier sind die nachgiebigen Längsstege 8' direkt am Schaufelfuss vorgesehen.

Es versteht sich, dass die Erfindung nicht auf das dargestellte und beschriebene Beispiel beschränkt ist:
- In Abweichung zur gezeigten Anordnung können selbstverständlich die deformierbaren Stege statt in radialer Richtung auch in axialer Richtung verlaufen. Dies könnte beispielsweise der Fall sein bei Gleichdruckbeschauflungen, bei denen zwischen Laufschaufeleintritt und -austritt kein Druckunterschied und somit kein Dichheitsproblem vorliegt. In einem solchen Fall würde der radial äussere Steg einer plastischen Deformation unterliegen, während der radial innere Steg, der etwa in der Ebene der Tragzacken angebracht würde, im elastischen Bereich arbeiten würde.
- Im übrigen ist es nicht zwingend, zwischen jedem Schaufelfuss ein solches nachgiebiges Zwischenblech anzuordnen. Grundsätzlich kann als Bemessungsrichtlinie angegeben werden, dass die Anzahl der einzufügenden Zwischenbleche abhängig ist von der Grösse der auftretenden Ringspannung und vom Mass der aufzunehmenden Deformation. Bei einer grossen Anzahl von Schaufeln pro Reihe kann es durchaus angebracht sein, jeweils nur ein Blech mit Längsstegen zwischen Schaufelpaketen einzufügen.
- Zu Einfüllzwecken insbesondere bei vortordierten Schaufeln ohne Einfüllöffnung kann eine gewisse Anzahl von Zwischenblechen axial geteilt sein, wodurch die Funktion der Längsstege keineswegs beeinträchtigt wird.
- Schliesslich ist die Anwendung der Erfindung auch nicht auf die gezeigten axial durchströmten Turbomaschinen beschränkt, sondern kann mit Vorteil ebenfalls bei Radialmaschinen angewendet werden. In diesem Fall würden die Längsstege nicht in radialer Richtung, sondern in axialer Richtung verlaufen.

## Patentansprüche

1. Laufschaufelbefestigung im Trommelrotor (1) einer Turbomaschine, in welchem die Schaufeln mit ihren Füssen (4) reihenweise in umlaufenden Schaufelnuten (5) mit seitlichen Tragzacken befestigt sind,
dadurch gekennzeichnet,
dass in Umfangsrichtung zwischen benachbarten Schaufelfüssen nachgiebige Elemente vorgesehen sind, welche in der Form von mindestens zwei deformierbaren Längsstegen (8,8') ausgebildet sind, die sich in radialer Richtung über zumindest annähernd die Tiefe der Schaufelnut (5) erstrecken.

2. Laufschaufelbefestigung nach Anspruch 1, dadurch gekennzeichnet, dass die Längsstege (8) auf einem Zwischenblech (7) angeordnet sind, welches zwischen je zwei benachbarten Schaufeln eingeschoben ist.

3. Laufschaufelbefestigung nach Anspruch 2, dadurch gekennzeichnet, dass die Längsstege (8') am Schaufelfuss (4) selbst an zumindest einer seiner Seiten angeordnet sind.

## Claims

1. Rotor blade fastening arrangement in the drum rotor (1) of a turbomachine, in which the roots (4) of the blades are fastened in rows in peripheral blade grooves (5) with support indentations at the side, characterized in that flexible elements are provided in the peripheral direction between adjacent blade roots, which flexible elements are in the form of at least two deformable longitudinal protrusions (8, 8') which extend in the radial direction over at least approximately the depth of the blade groove (5).

2. Rotor blade fastening arrangement according to Claim 1, characterized in that the longitudinal protrusions (18) are located on an intermediate plate (7) which is inserted between each two adjacent blades.

3. Rotor blade fastening arrangement according to Claim 2, characterized in that the longitudinal protrusions (8') are located on the blade root (4) itself on at least one of its sides.

## Revendications

1. Fixation d'aubes mobiles dans le rotor à tambour (1) d'une turbo-machine, dans lequel les aubes sont fixées en rangées par leurs pieds (4) dans des rainures d'aubes périphériques (5) pourvues de bords d'appui latéraux, caractérisée en ce qu'il est prévu, entre des pieds d'aubes voisins dans le sens circonférentiel, des éléments pouvant se déformer, qui ont la forme d'au moins deux nervures longitudinales déformables (8, 8'), qui s'étendent en direction radiale sur au moins approximativement la profondeur de la rainure d'aubes (5).

2. Fixation d'aubes mobiles suivant la revendication 1, caractérisée en ce que les nervures longitudinales (8) sont disposées sur une plaquette intercalaire (7) qui est insérée entre deux aubes voisines.

3. Fixation d'aubes mobiles suivant la revendication 1, caractérisée en ce que les nervures longitudinales (8') sont disposées sur le pied d'aube (4) lui-même sur au moins une de ses faces.
